# EUROPÄISCHE PATENTSCHRIFT

(11) **EP 1 053 058 B1**
(45) Veröffentlichungstag und Bekanntmachung des Hinweises auf die Patenterteilung: **17.04.2002**
(21) Anmeldenummer: 99908760.4
(22) Anmeldetag: 01.02.1999
(51) Int. Cl.: B03B 9/06

(54) **VERFAHREN ZUR THERMISCHEN BEHANDLUNG VON ABFÄLLEN**
METHOD FOR THERMALLY TREATING WASTE MATERIALS
PROCEDE DE TRAITEMENT THERMIQUE DE DECHETS

(30) Priorität: 30.01.1998 DE 19803690; 23.02.1998 DE 19807539
(43) Veröffentlichungstag der Anmeldung: 22.11.2000
(73) Patentinhaber: Anders, Horst, 79423 Heitersheim (DE)
(72) Erfinder: Anders, Horst, 79423 Heitersheim (DE)
(74) Vertreter: Winter, Brandl, Fürniss, Hübner, Röss, Kaiser, Polte, Partnerschaft
(86) Internationale Anmeldenummer: DE9900272
(87) Internationale Veröffentlichungsnummer: WO9938618

(56) Entgegenhaltungen:
- DE-A- 2 642 451
- DE-A- 3 718 336
- DE-A- 3 835 230
- DE-A- 4 329 711
- DE-A- 19 526 720

## Beschreibung

Die Erfindung betrifft ein Verfahren zur Behandlung von Abfällen gemäß dem Oberbegriff des Patentanspruchs 1 und einen nach einem derartigen Verfahren hergestellten Feststoff.

Das Abfallgesetz schreibt die Pflicht zur Abfallverwertung vor. Wann immer es möglich ist, ist die Abfallverwertung anstelle sonstiger Abfallentsorgung durchzuführen. Parallel dazu besteht ein Reststoffverwertungsgebot nach dem Bundesimmissionsschutzgesetz (BImSchG).

Das Abfallgesetz gilt prinzipiell für jeden Abfallbesitzer sowie für entsorgungspflichtige Körperschaften, wie beispielsweise Städte-Reinigungsbetriebe. Im Abfallgesetz ist geregelt, daß die Abfälle derart zu sammeln, zu transportieren, zwischenzulagern und zu behandeln sind, daß die Möglichkeiten der Abfallverwertung nicht behindert werden. Nach dem Abfallgesetz hat das Gewinnen von Stoffen oder Energie aus Abfällen Vorrang vor der sonstigen Entsorgung, solange dies technisch möglich ist, die hierbei entstehenden Mehrkosten im Vergleich zu anderen Verfahren nicht zumutbar sind und für die gewonnenen Stoffe oder für die gewonnene Energie ein Markt vorhanden ist. Die Abfallverwertung ermöglicht eine Mehrfachnutzung von Stoffen unter Ersparnis von primären Rohstoffen oder der Ersparnis von primären Energieträgern.

Die derzeit am häufigsten angewendete Art der Abfallverwertung besteht darin, den Abfall, wie beispielsweise Hausmüll oder chemischen Abfall in thermischen Verbrennungsanlagen zu verbrennen. Die Verbrennung von Abfällen wird in der Regel als Umweltschutzmaßnahme vor der Ablagerung der Rückstände auf Deponien durchgeführt.

Durch die Abfallverbrennung sollen organische Bestandteile thermisch oxidativ abgebaut werden, um die im Abfall enthaltenen oder entstehenden anorganischen Stoffe möglichst in verwertbarer oder ablagerungsfähiger Form abzuscheiden, das Gewicht und/oder das Volumen des Abfalls zu verringern und den Wärmeinhalt des Abfalls durch Energiekopplung zu nutzen. Bei der üblicherweise angewendeten Hausmüllverbrennung wird der vorsortierte Abfall (Hausmüll, hausmüllähnliche Gewerbeabfälle, Sperrmüll und gewisse Anteile an Chemieabfällen) einem Drehrohrofen zugeführt und dort bei Temperaturen zwischen 1000 und 1200°C zu Asche und Rauchgas verbrannt. Das entstehende Rauchgas wird gefiltert und einer Rauchgaswäsche unterzogen. Die bei der Verbrennung frei werdende Wärme wird zur Erzeugung von Prozeß- und Heizdampf oder auf sonstige Weise in parallelen Prozessen genutzt. Die im Drehrohrofen anfallende Asche und Schlacke sowie die aus dem Rauchgas ausgefilterte Flugasche werden üblicherweise auf einer Deponie gelagert.

Problematisch bei der vorbeschriebenen Verbrennung sind jedoch, die vom Gesetzgeber in der BImSch vorgeschriebenen Grenzwerte insbesondere im Rauchgas einzuhalten, so daß erhebliche anlagentechnische Aufwendungen unternommen werden müssen, um die gesetzlichen Vorgaben zu erfüllen.

Aus der DE 195 26 720 A1 ist ein Verfahren zur Behandlung von Abfällen bekannt, bei dem diese nach einer mechanischen und biologischen Vorbehandlung tiefgekühlt und anschließend zerkleinert werden. Obwohl zur Tiefkühlung der Fraktion teilweise Energie verwendet werden kann, die bei der Verbrennung einer Brennfraktion des Abfalls frei wird, ist ein erheblicher verfahrenstechnischer Aufwand erforderlich, um die Tiefkühlung der Abfallfraktian zu ermöglichen.

In der DE 4 329 711 A1 ist ein Verfahren zur Behandlung von Müll offenbart, bei dem Kunststoffabfälle abgetrennt und der vebleibende Müll in drei Teilfraktionen unterteilt wird, von denen die Fraktion mit mittlerer korngrösse einer biologischen Stabilisierung unterzogen wird.

Die DE 2 642 451 OS zeigt ein Abfallverwertungverfahren bei dem der gesamte Abfall einer Rotte zugeführt und anschliessend kompaktiert wird.

Der Erfindung liegt die Aufgabe zugrunde, ein Verfahren zu schaffen, das mit minimalem verfahrenstechnischen Aufwand eine ökologisch und energetisch sinnvolle Weiterbehandlung der heizwertreichen Fraktion ermöglicht.

Diese Aufgabe wird durch ein Verfahren mit den Merkmalen des Patentanspruchs 1 gelöst.

Die Besonderheit des vorliegenden Verfahrens besteht darin, daß eine kohlenstoffreiche Fraktion von den angelieferten Abfällen und Restatoffen abgetrennt wird, wobei die Vorbehandlung zumindest mechanische und biologische Schritte aufweist. Die eine vorbestimmte Partikelgröße nicht überschreitende, aufbereitete kohlenstoffreiche Fraktion wird nach einer biologischen Stabilisierung gemäß einer ersten Alternative der vorliegenden Erfindung einer Verbrennungs- oder Vergasungsanlage, vorzugsweise einer Wirbelschicht-Verbrennungs- oder Vergasungsanlage zugeführt, die in Energieverbund mit einem energieintensiven Prozeß betrieben wird, so daß die beim Wirbelschichtprozeß frei werdende Energie für den energieintensiven Prozeß nutzbar ist. Die thermische Aufbereitung in einer Wirbelschicht-Verbrennungs- oder Vergasungsanlage zeichnet sich dadurch aus, daß der Schadstoffgehalt des anfallenden Rauchgases in der Regel ohne aufwendige Filter- bzw. Rauchgaswäscheschritte unterhalb der gesetzlichen Grenzwerte gehalten werden kann. Gemäß einer weiteren Alternative des erfindungsgemäßen Verfahrens wird vorgesehen, die kohlenstoffreiche Fraktion als Schüttgut oder als Formkörper direkt in einem energieintensiven Prozeß als Ersatzbrennstoff zu verwenden. Diejenigen Bestandteile der kohlenstoffreichen Fraktion des Abfalls, die nicht als Festbrennstoff eingesetzt werden sollen, können in einer Deponie ab- oder zwischengelagert werden, da dieser Feststoff praktisch nicht eluierbar ist.

Die biologische Stabilisierung erfolgt vorzugsweise durch eine Perkolation oder Extraktion der organischen Bestandteile mittels einer Auswaschflüssigkeit.

Die beiden erstgenannten Varianten haben den Vorteil gemeinsam, daß für den energieintensiven Prozeß erforderliche Primärenergieträger zumindest teilweise ersetzt werden können.

Der biologischen Stabilisierung schließt sich vorteilhafterweise eine Trocknung der kohlenstoffreichen Fraktion an.

Die bei der Verbrennung entstehende Asche kann einer Weiterverwendung, beispielsweise als Bergversatz oder als Substitutionsmittel in der Zementindustrie verwendet werden. Alternativ kann eine Vergasung erfolgen, wobei das Gas anschließend energetisch oder stofflich verwertet werden kann.

An die biologische Stabilisierung und ggf. Trocknung der kohlenstoffreichen Fraktion schließt sich eine Kompaktierung an, bei der ein praktisch nicht eluierbarer Feststoff erhalten wird. Dieser Feststoff kann in einer Deponie abgelagert, als Substitutionsmittel in der vorbeschriebenen Weise oder als Festbrennstoff verwendet werden.

Die mechanische Aufbereitung umfaßt vorzugsweise wechselnd aufeinanderfolgende Zerkleinerungs- und Siebschritte, wobei es sich als besonders vorteilhaft herausgestellt hat, wenn nach den Zerkleinerungsschritten Nichteisen-, Eisen- und/oder Schwerstoffe abgetrennt werden.

Die bei der Verbrennung anfallenden Immissionen sind besonders gering, wenn die Verbrennung oder Vergasung nach einem Verfahren erfolgt, bei dem eine zirkulierende Wirbelschicht verwendet wird.

Sonstige vorteilhafte Weiterbildungen der Erfindung sind Gegenstand der weiteren Unteransprüche.

Bevorzugte Ausführungsbeispiele des erfindungsgemäßen Verfahrens werden im folgenden anhand schematischer Zeichnungen näher erläutert. Es zeigen:
Figur 1 ein Verfahrensschema zur Verdeutlichung des erfindungsgemäßen Verfahrens;
Figur 2 ein Blockdiagramm zur Erläuterung wesentlicher Verfahrensschritte und
Figur 3 eine Prinzipdarstellung einer biologischen Stabilisierung.

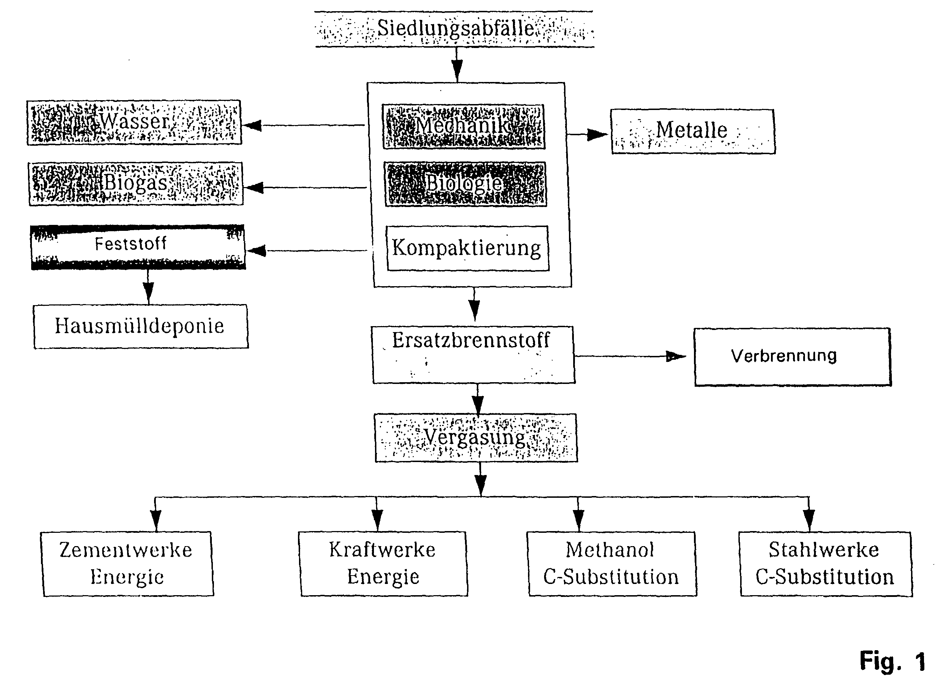

Figur 1 zeigt ein Verfahrensgrundschema zur Beschreibung von drei alternativen Verfahrensvarianten.

Der angelieferte Abfall, beispielsweise Siedlungsabfall wird zunächst einer mechanischen Aufbereitung unterzogen. Dabei wird der Abfall zerkleinert, gesiebt und Störstoffe sowie Metalle abgeschieden.

Eine nach dem Siebvorgang anfallende kohlenstoffreiche Fraktion (Siebüberlauf) wird einer biologischen Stabilisierung zugeführt, bei der organische Bestandteile des Abfalls abgebaut werden.

Die biologische Stabilisierung kann beispielsweise durch eine aerobe Hydrolyse durch Zugabe einer Auswaschflüssigkeit und luft und eine sich anschließende Trocknung enthalten.

Die biologisch stabilisierte, kohlenstoffreiche Abfallfraktion wird anschließend einer Kompaktierungseinrichtung zugeführt und zu einem Formkörper kompaktiert. Diese Kompaktierungseinrichtung kann beispielsweise eine Extruder-/Strangpresse sein. Durch die Kompaktierung erfolgt eine weitere Entwässerung der Abfallfraktion, wobei aufgrund der während des Kompaktierungsvorgang eingetragenen Energie eine Erwärmung und Nachtrocknung erfolgen kann.

Während der vorbeschriebenen Verfahrensschritte verwendetes oder anfallendes Wasser wird gereinigt und biologische Bestandteile in einem anaeroben Vorgang zu Biogas verwandelt.

Der sich nach der Kompaktierung ergebene Feststoff kann prinzipiell auf unterschiedliche Weisen weiterverarbeitet werden.

Da der Feststoff nach der Kompaktierung praktisch nicht mehr eluierbar ist, kann dieser ohne großen Aufwand in einer Hausmülldeponie abgelagert werden.

Alternativ zur Ablagerung in einer Deponie kann der kompaktierte Feststoff als Ersatzbrennstoff in einer energieintensiven Anlage, beispielsweise einer Hausmüllverbrennungsanlage eingesetzt werden.

Gemäß einer dritten Alternative ist vorgesehen, den Feststoff einer Vergasung, beispielsweise einer Wirbelschichtvergasung zuzuführen. Das dabei entstehende Rohgas kann zur Energiesubstitution in Kraftwerken oder Zementwerken oder zur Herstellung von Methanol verwendet werden. Desweiteren kommt ein Einsatz als Kohlenstoffsubstitutionsmittel im Stahlwerk in Betracht.

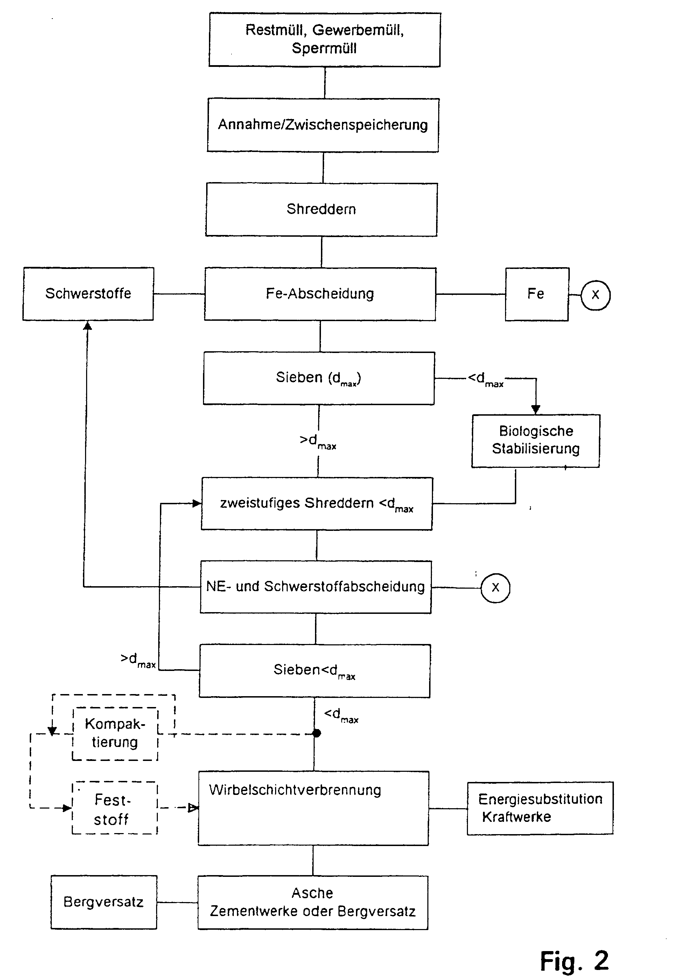

Im folgenden wird anhand des in Figur 2 dargestellten Verfahrensschemas ein erfindungsgemäßes Verfahren detailierter beschrieben.

Der nach dem Verfahren zu behandelnde Abfall, beispielsweise Hausmüll, Gewerbemüll, Sperrmüll, DSD-Leichtfraktion, Mischkunststoffe, Spuckstoffe und sonstige organische Abfälle wird zunächst zu einer Annahmestation der Anlage geschafft und dort zwischengelagert oder direkt zum nächsten Verarbeitungsschritt weitergeleitet. Die Zwischenlagerung kann in Bunkern oder ähnlichem erfolgen.

In einem ersten Verfahrensschritt wird der angelieferte Abfall zunächst zerkleinert, wobei geeignete Shredder oder sonstige Zerkleinerungsapparate, wie beispielsweise Mühlen, Schneidapparate und/oder Brecher eingesetzt werden können. In diesem ersten Zerkleinerungsschritt wird der Abfall vorzerkleinert, so daß sich ein vorbestimmter Maximalpartikeldurchmesser dₘₐₓ einstellt.

Bestimmte Abfälle werden bereits mit Partikeldurchmessern angeliefert, die unterhalb des Grenzwertes dₘₐₓ liegen, so daß der vorbeschriebene erste Zerkleinerungsschritt bei bestimmten Anwendungen nicht erforderlich ist. Um derartige Verfahrensvarianten berücksichtigen zu können, werden die Abfälle in der Regel bei der Annahmestelle nach gewissen Kriterien sortiert abgelagert. Diese Kriterien können sich beispielsweise durch den Partikeldurchmesser oder nach der Herkunft und den Inhaltsstoffen des Abfalles richten.

Der vorzerkleinerte, den Maximalpartikeldurchmesser dₘₐₓ aufweisende Abfall wird dann einem Abscheider zugeführt, in dem in der Regel eisenhaltige Metalle und Schwerstoffe abgetrennt werden. Diese Schwerstoffe, beispielsweise Steine, Beton, Bauschutt etc., können beispielsweise in Bauschuttaufbereitungsanlagen weiterverwertet werden. Alternativ zur Verwertung in derartigen Anlagen können die Schwerstoffe auch in geeigneten oberoder untertägigen Deponien abgelagert werden.

Die abgetrennten eisenhaltigen Metalle werden nach einer Aufbereitung industriell vermarktet.

Der von den Schwerstoffen und eisenhaltigen Metallen befreite Abfall wird dann einem Klassierapparat, beispielsweise einer Siebanlage zugeführt, in der der zerkleinerte Abfall klassiert wird. In diesen Klassierapparaten wird der Abfall in zwei Kornklassen, in ein grobes und ein feines Produkt unterteilt, so daß das Feinkorn den maximalen Durchmesser dₘₐₓ enthält, während das Grobprodukt diejenigen Partikel enthält, die einen größeren Durchmesser als dₘₐₓ aufweisen.

Der Feinkornanteil des Abfalls wird in einem weiteren Schritt biologisch aufbereitet, wobei die Zielrichtung dieser biologischen Aufbereitung im wesentlichen darin besteht, die in der Feinkornfraktion enthaltene organische Substanz weitestgehend abzubauen oder zumindest zu stabilisieren und den Kohlenstoffanteil der Feinkornfraktion zu erhöhen. Im Laufe der biologischen Behandlung werden die zum Abtransport der Stoffwechselprodukte erforderlichen Gase entfeuchtet, so daß diese Entfeuchtung auch eine Trocknung der biologisch behandelten Feinkornfraktion mit sich zieht. Beim erfindungsgemäßen Verfahren wird es bevorzugt, wenn die biologische Stabilisierung durch einen aeroben Abbau der organischen Stoffe erfolgt. Unter aeroben Abbau werden in erster Linie biologische Abbauvorgänge verstanden, die durch Bakterien bzw. sonstige Kleinlebewesen in Gegenwart von Sauerstoff erfolgen. Der Rotteverlust bei einem derartigen aeroben Abbau kann bis zu einem Drittel des Ausgangsvolumens betragen.

Die biologische Stabilisierung erfolgt vorzugsweise durch eine aerobe Hydrolyse der aufbereiteten Abfallfraktion. Bei der aeroben Hydrolyse wird das aufzubereitende Stoffgemisch in einem Reaktor mit Luft und einer Auswaschflüssigkeit (Wasser) beaufschlagt. Durch die Einwirkung des Luftsauerstoffs und die gleichzeitig eingestellte Feuchtigkeit erfolgt eine aerobe, thermophile Erwärmung des Stoffgemisches, so daß die Biozellen aufgebrochen und die freigesetzten organischen Substanzen durch die Waschflüssigkeit abtransportiert werden.

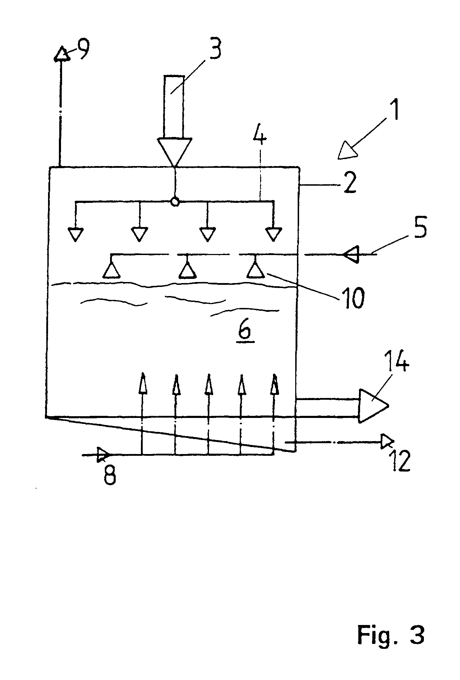

Zur Durchführung einer derartigen aeroben Hydrolyse kann beispielsweise ein Perkolator eingesetzt werden, wie er schematisch in Figur 3 dargestellt ist. Ein derartiger Perkolator 1 hat einen Reaktor 2, in den die mechanisch/biologisch aufbereitete Abfallfraktion 3 über eine geeignete Materialeintragseinrichtung 4 zugeführt wird. Im Reaktorinnenraum befindet sich dann eine Abfallschüttung 6. Diese wird bei einem bevorzugten Ausführungsbeispiel durch Zugabe von Auswaschflüssigkeit 5 und von Luft 8 behandelt, wobei ein weitgehender Abbau der organischen Zellen durch biologischen Aufschluß erfolgt. Die Luft 8 wird dabei von unten in den Reaktor 2 eingeführt und die Abluft 9 an der Oberseite des Reaktors abgezogen. Die Auswaschflüssigkeit 5 wird über einen Auswaschmittel-Verteiler 10 von oben (Ansicht nach Figur 3) auf die Abfallschüttung 6 aufgebracht und die mit Organik beladene Auswaschflüssigkeit 12 an der Unterseite des Reaktors 2 abgezogen. Entsprechend wird der organisch behandelte Abfall 14 über geeignete Materialaustragseinrichtungen aus dem Reaktor 6 abgezogen. Dieser kann kontinuierlich oder diskontinuierlich betrieben werden. Im Anschluß an die biologische Stabilisierung durch aerobe Hydrolyse kann sich ein Trocknungsschritt anschließen.

Die beladene Auswaschflüssigkeit 12 wird einer nicht dargestellten Abwasseraufbereitung zugeführt, in der Störstoffe abgeschieden und der biologische Anteil in Biogas umgewandelt wird.

Die über Kopf aus dem Reaktor 2 abgezogene beladene Abluft 9 wird einer Filtereinrichtung oder sonstigen Reinigungseinrichtung zugeführt.

Der nach der Klassierung abgetrennte Siebüberlauf (Grobkornanteil) hat erfahrungsgemäß einen hohen Anteil an heizwertreichen Anteilstoffen.

Die biologisch stabilisierte, getrocknete und hinsichtlich des Kohlenstoffgehaltes angereicherte Fraktion wird dann alleine oder gemeinsam mit der bei der Klassierung angefallenen Grobkornfraktion einem zweiten Zerkleinerungsschritt zugeführt. Dieser zweite Zerkleinerungsschritt, der beispielsweise durch ein zweistufiges Shreddern oder - wie bereits oben erwähnt - durch Brechen, Malen, Schneiden etc. erfolgen kann, soll der maximale Partikeldurchmesser auf einen Wert Dₘₐₓ verringert werden, der wesentlich kleiner als dₘₐₓ ist.

Der derart zerkleinerte Abfall wird einem Abscheideschritt zugeführt, in dem wiederum Schwerstoffe und nichteisenhaltige Metalle abgeschieden werden. Erstere werden, wie bereits beschrieben, einer weiteren Verwertung, beispielsweise in einer Bauschuttaufbereitungsanlage, zugeführt oder aber deponiert. Die nichteisenhaltigen Metalle werden nach einer Aufbereitung industriell vermarktet.

Nach der Abscheidung der Schwerstoffe und der nichteisenhaltigen Metalle schließt sich ein weiterer Klassierungsschritt an, bei dem der zerkleinerte Abfall in eine Feinkornfraktion mit dem maximalen Partikeldurchmesser Dₘₐₓ und einen Siebüberlauf (Grobkornfraktion) von Dₘₐₓ aufgetrennt wird. Der nach der Klassierung anfallende Siebüberlauf wird zurück zum zweiten Zerkleinerungsschritt geführt und nochmals zerkleinert. Die heizwertreiche Feinkornfraktion mit einem Partikeldurchmesser < Dₘₐₓ ist von Metallen und Schwerstoffen befreit und äußerst heizwertreich, so daß diese Feinkornfraktion sehr gut als Ersatzbrennstoff geeignet ist. Dieser, nach dem erfindungsgemäßen Verfahren erhaltene Ersatzbrennstoff soll unter dem Markennamen "C-plus" vertrieben werden.

Für die Verwendung dieses Ersatzbrennstoffes bieten sich nun drei Alternativen an.

Gemäß der strichpunktiert eingezeichneten Alternative wird der Ersatzbrennstoff, der aus einer Schüttung mit einem Partikeldurchmesser < Dₘₐₓ besteht, entweder in unveränderter Form oder aber in kompaktierter Form (Formkörper) in Zementwerken oder anderen energieintensiven Produktionsprozessen eingesetzt, um Primärbrennstoffe zu ersetzen.

Bei einer Kompaktierung (siehe Figur 1) wird ein Feststoff erhalten, der praktisch nicht mehr eluierbar ist. Anstelle einer Verbrennung oder Vergasung dieses Feststoffes kann daher alternativ auch eine Ablagerung auf einer Deponie oder eine Zwischenlagerung erfolgen.

Bei einer alternativen Variante wird die heizwertreiche Feinkornfraktion einem Wirbelschichtprozeß, beispielsweise einer Wirbelschichtverbrennung zugeführt und die dabei entstehende Energie bei in Energieverbund stehenden energieintensiven Prozessen verwendet. Dieser Energieverbund kann beispielsweise mit einem Kohlekraftwerk, Heizkraftwerken, Zementwerken oder sonstigen Prozessen bestehen, die einen erheblichen Energiebedarf haben. Durch den Wärmeaustausch zwischen dem Wirbelschichtprozeß und dem energieintensiven Prozeß können in erheblichem Maße Energie und entsprechende Primärenergieträger eingespart werden.

Die Wirbelschichtverbrennung ist ein Verbrennungsprozeß, bei dem eine auf einem Rost befindliche Schicht aus granuliertem, inertem Material (beispielsweise Sand) mit durchtretender Verbrennungsluft aufgewirbelt wird. Die heizwertreiche Feinkornfraktion wird von oben in die zirkulierende Wirbelschicht eingebracht, wobei aufgrund des intensiven Wärmeaustauschs innerhalb der Wirbelschicht eine vollständige, nahezu rückstandslose Verbrennung erfolgt. Bei der Wirbelschichtvergasung werden die festen Brennstoffe durch Zufuhr der erforderlichen Umwandlungsenergie in den gasförmigen Zustand gebracht. Die Vergasung erfolgt häufig in Generatoren bei erhöhtem Druck und Temperatur mit Hilfe von Luft, Sauerstoff und Wasserdampf. Das bei der Vergasung entstehende Gas kann zur Methanherstellung oder zur Substitution fossiler Brennstoffe verwendet werden.

Anstelle der vorbeschriebenen Wirbelschichtprozesse können auch andere, geeignete Verbrennungs- oder Vergasungsverfahren verwendet werden, bei denen möglichst eine vollständige Umwandlung stattfindet und somit die Immissionen unterhalb des im Bundesemissionsschutzgesetz festgelegten Grenzwertes liegen.

Die bei der Wirbelschichtverbrennung, -vergasung oder einer sonstigen Verbrennung/Vergasung entstehende Asche kann als Substitutionsmittel in der Baustoffindustrie, beispielsweise bei der Zement- oder Ziegelherstellung verwendet werden. Alternativ dazu kann die Asche auch im Rahmen von Bergversatzmaßnahmen in Untertagedeponien abgelagert werden.

Durch das erfindungsgemäße Verfahren wird demzufolge eine heizwertreiche Feinkornfraktion ausgebildet, die als Substitutionsmittel für Primärenergieträger (fossile Brennstoffe etc.) direkt in energieintensiven Prozessen verwendet werden kann. Bevorzugt wird es jedoch, die heizwertreiche Feinkornfraktion in einer Wirbelschichtanlage oder einer sonstigen geeigneten Verbrennungsanlage nahezu rückstandsfrei zu verbrennen oder vergasen und die frei werdende Energie durch Wärmeübertragung in einem energieintensiven Prozeß, beispielsweise einem Heizkraftwerk, Zementwerken oder ähnlichem zu nutzen. Die bei der Verbrennung entstehende Asche kann einer weiteren Verwertung, beispielsweise in der Baustoffindustrie, zugeführt werden oder als Bergwerkversatzmittel eingesetzt werden.

Offenbart ist ein Verfahren zu Behandlung von Abfällen, bei dem durch mechanische, thermische und biologische Behandlung eine heizwertreiche Fraktion mit einem vorbestimmten Maximalpartikeldurchmesser erhalten wird, die entweder als Ersatzbrennstoff in energieintensiven Prozessen verwendet werden kann, oder in einer Verbrennungsanlage verbrannt wird, wobei die frei werdende Energie durch Energiekopplung in einem energieintensiven Prozeß nutzbar ist, oder aber vergast wird, wobei anschließend das Gas energetisch oder stofflich verwertet werden kann, wie z. B. zur Energiesubstitution in Kraftwerken und Zementwerken oder zur Herstellung von Methanol bzw. als Reduktionsmittel in Stahlwerken.

## Patentansprüche

1. Verfahren zur Behandlung von Abfall mit den Schritten:
- mechanische Aufbereitung des Abfalls;
- Auftrennung in eine kohlenstoffreiche Kleinkornfraktion mit einer einen Grenzwert (dₘₐₓ) nicht überschreitenden Partikelgröße und eine Grobkornfraktion mit einer den Grenzwert (dₘₐₓ) überschreitenden Partikelgröße;
- biologische Stabilisierung der Kleinkornfraktion durch eine aerobe Hydrolyse mit Zuführung einer Auswaschflüssigkeit (5) und Luft (8);
- Kompaktierung der nach der aeroben Hydrolyse entstandenen kohlenstoffreichen Fraktion zu einem Feststoff; und
a) Verbrennen des Feststoffes in einer Verbrennungsoder Vergasungsanlage, insbesondere einer Wirbelschichtverbrennungs- oder Wirbelschichtvergasungsanlage, die in Energieverbund mit einer energieintensiven Anlage, wie beispielsweise einem Heizkraftwerk betrieben wird;
b) Verwendung des Feststoffes als Ersatzbrennstoff in der energieintensiven Anlage oder
c) Lagern des Feststoffs auf einer Deponie.

2. Verfahren nach Patentanspruch 1, **dadurch gekennzeichnet, daß** sich an die biologische Stabilisierung eine Trocknung der Fraktion anschließt.

3. Verfahren nach einem der vorhergehenden Patentansprüche, **dadurch gekennzeichnet, daß** die bei der Wirbelschichtverbrennung oder -vergasung entstehende Asche, beispielsweise als Bergversatz und Substitutionsmittel in der Baustoffindustrie weiterverwendet wird.

4. Verfahren nach einem der vorhergehenden Patentansprüche, **dadurch gekennzeichnet, daß** die mechanische Aufbereitung wechselnd aufeinanderfolgende Zerkleinerungsund Siebschritte enthält.

5. Verfahren nach Anspruch 4, **dadurch gekennzeichnet, daß** sich einem Zerkleinerungsschritt eine Abscheidung von nichteisenhaltigen, eisenhaltigen oder schwerstoffhaltigen Anteilen anschließt.

6. Verfahren nach Patentanspruch 3 oder 5, **dadurch gekennzeichnet, daß** die Abfallstoffe in einem ersten Zerkleinerungs- und Siebvorgang in eine Feinkornfraktion und eine Grobkornfraktion aufgeteilt werden, und die Kleinkornfraktion einer biologischen Stabilisierung zugeführt wird.

7. Verfahren nach einem der vorhergehenden Patentansprüche, **dadurch gekennzeichnet, daß** die Verbrennung oder Vergasung mittels einer zirkulierenden Wirbelschicht erfolgt.

## Claims

1. Waste treatment process, including the steps:
- mechanically processing the waste;
- separation into a carbon-rich small-particle fraction having a particle size not in excess of a limit value (dₘₐₓ), and a coarse-particle fraction having a particle size in excess of said limit value (dₘₐₓ);
- biological stabilization of the small-particle fraction by aerobic hydrolysis with supply of a leaching liquid (5) and air (8);
- compacting the carbon-rich fraction realized after aerobic hydrolysis into a solid; and
a) combustion of the solid in a combustion or gassing installation, in particular a fluidized bed combustion or fluidized bed gassing installation operated in energetic interconnection with an energy-intensive installation such as a combined heating and power station;
b) use of the solid as a surrogate fuel in the energy-intense installation, or
c) storing the solid on a dump.

2. Method according to claim 1, **characterized in that** biological stabilization is followed by drying the fraction.

3. Method according to any one of the preceding claims, **characterized in that** the ashes produced in fluidized bed combustion or gassing are further used, e.g. as minefill or substituent in construction material industry.

4. Method according to any one of the preceding claims, **characterized in that** mechanical processing comprises successively alternating comminution and sifting steps.

5. Method according to claim 4, **characterized in that** one comminution step is followed by separating out non-ferrous, ferrous or heavy substance-containing components.

6. Method according to claim 3 or 5, **characterized in that** the waste matters are separated into a fine-particle fraction and a coarse-particle fraction in a first comminution and sifting process, and the small-grain fraction is supplied to a biological stabilization.

7. Method according to any one of the preceding claims, **characterized in that** combustion or gassing is performed with the aid of a circulating fluidized bed.

## Revendications

1. Procédé de traitement des déchets comprenant les étapes consistant à :
- traiter mécaniquement les déchets ;
- les séparer en une fraction à grains fins riche en carbone, dotée d'une taille de particules n'excédant pas une valeur limite (dₘₐₓ), et en une fraction à gros grains, dotée d'une taille de particules n'excédant pas la valeur limite (dₘₐₓ) ;
- stabiliser biologiquement la fraction à grains fins par une hydrolyse aérobie avec amenée d'un liquide de lavage (5) et d'air (8) ;
- compacter la fraction riche en carbone issue de l'hydrolyse aérobie en une matière solide ; et
a) incinérer la matière solide dans une installation d'incinération ou de carburation, en particulier dans une installation d'incinération à lit fluidisé ou installation de carburation à lit fluidisé, qui fonctionne en association énergétique avec une installation grande consommatrice d'énergie, comme par exemple une centrale thermique ;
b) utiliser la matière solide comme combustible de remplacement dans l'installation grande consommatrice d'énergie ou
c) stocker la matière solide dans une décharge.

2. Procédé selon la revendication 1, **caractérisé en ce qu'**un séchage de la fraction est adjoint à la stabilisation biologique.

3. Procédé selon l'une des revendications précédentes, **caractérisé en ce que** les cendres provenant de l'incinération à lit fluidisé ou la carburation à lit fluidisé sont réutilisées par exemple comme remblai et produits de substitution dans l'industrie du bâtiment.

4. Procédé selon l'une des revendications précédentes, **caractérisé en ce que** le traitement mécanique contient des étapes de fragmentation et de filtration se succédant tour à tour.

5. Procédé selon la revendication 4, **caractérisé en ce qu'**une séparation de parties non ferreuses, ferreuses ou contenant des matériaux lourds est adjointe à l'étape de fragmentation.

6. Procédé selon la revendication 3 ou 5, **caractérisé en ce que** les déchets sont séparés en une fraction à grains fins et en une fraction à gros grains dans une première étape de fragmentation et de filtration et que la fraction à petits grains est ajoutée à une stabilisation biologique.

7. Procédé selon l'une des revendications précédentes, **caractérisé en ce que** la combustion ou la carburation s'effectue au moyen d'un lit fluidisé circulant.
